Europäisches Patentamt

European Patent Office

Office européen des brevets

(11) Publication number: **0 512 784 A1**

# EUROPEAN PATENT APPLICATION

(21) Application number: **92304013.3**

(22) Date of filing: **05.05.92**

(51) Int. Cl.5: **A01D 34/00**

(30) Priority: **10.05.91 GB 9110125**

(43) Date of publication of application:
**11.11.92 Bulletin 92/46**

(84) Designated Contracting States:
**BE CH DE FR GB IT LI NL**

(71) Applicant: **Black & Decker Inc.**
**Drummond Plaza Office Park 1423 Kirkwood**
**Highway**
**Newark Delaware 19711(US)**

(72) Inventor: **Webster, Craig Duncan**
**Flat 3, 13 Eslington Terrace**
**Jesmond, Newcastle upon Tyne(GB)**

(74) Representative: **Stagg, Diana Christine et al**
**Emhart Patents Department Lyn House 39**
**The Parade**
**Oadby Leicester LE2 5BB(GB)**

(54) Improvements in or relating to vegetation cutters.

(57) A device (1) for cutting vegetation comprises
a housing (28) rotatable about an axis;
a rotatable spool (22) within the housing (28) storing a supply of flexible line (24) having an end extending through an aperture (26) in the housing (28) into a cutting plane normal to said axis and
a manual feed system for said flexible line (24).

The feed system comprises means for manually actuating rotation of the spool (22) relative to the housing (28) in the reverse direction to the driving direction.

The manual feed system is preferably provided as a manual override for an automatic line feed system.

FIG. 2

EP 0 512 784 A1

This invention relates to vegetation cutters and has particular reference to cutters that cut by means of a filament or strip that is rotated rapidly about an axis that is usually substantially vertical but, for certain applications, can be horizontal.

In most filament cutters, the cutting filament or strip is stored on a spool or reel from which a cutting length extends. During use, wear on the cutting length shortens that length and it is then necessary to withdraw filament or strip from the spool to make up the cutting length to its working value.

This withdrawal of the filament or strip from the reel may be performed by the operator, either manually, for example by turning off the cutter, grasping the end of the filament and pulling it out of the housing or by operating a feeding mechanism while the motor is still running. However, it is preferable that the withdrawal of filament be effected generally without the intervention of the operator as this requires less skill from the operator, who does not need to decide when more line is required and also avoids the need to interrupt a cutting operation.

A number of proposals have been made for vegetation cutters in which the withdrawal of filament can be effected without the intervention of the operator, and particularly advantageous vegetation cutters of this type are described and claimed in European Patent Applications Nos. 417966 and 417967.

However, it is desirable to provide, in a vegetation cutter, manual override means by which the filament or strip can be withdrawn manually by the operator. Such a manual override may be useful under particular conditions, for example where there is a gradual erosion of the line or where the line has become tangled or the feed mechanism has jammed.

It is an object of the present invention to provide a vegetation cutter of the type which cuts by means of a filament or strip that is rotated rapidly about an axis, with a manual feed system for the filament or strip.

It is a further object of the present invention to provide a vegetation cutter of the type which cuts by means of a filament or strip that is rotated rapidly about an axis, which filament or strip is fed automatically from a storage spool or reel, which cutter comprises a manual override for the feeding of the filament or strip.

The present invention provides a device for cutting vegetation comprising; a housing rotatable about an axis; a rotatable spool within the housing storing a supply of flexible line having an end extending through an aperture in the housing into a cutting plane normal to said axis; and a manual feed system for said flexible line characterised in that said feed system comprises means for manually actuating rotation of the spool relative to the housing in the reverse direction to the driving direction.

The present invention further provides a device for cutting vegetation comprising; a housing rotatable about an axis; a rotatable spool within the housing storing a supply of flexible line having an end extending through an aperture in the housing into a cutting plane normal to said axis; and means for causing relative rotation between said spool and said housing whenever the length of line extending into said cutting plane is less than a predetermined length, to cause additional line to be fed into said cutting plane; which means comprises a series of angularly-spaced locking faces provided on the spool (or on a member connected thereto) or on the housing; a balance bar pivotally mounted on the housing or on the spool, said balance bar having a peg for engagement with said locking faces, the centre of gravity of said balance bar being on the side of the pivot point opposite from said peg and; means tending to direct said member onto said locking faces, characterised in that a manual override for said feeding means (iii) is provided, which override comprises means for rotating the spool relative to the housing when the cutter is at rest, in the direction opposite to that which feeds line, to cock the balance bar and allow line to be fed.

A preferred embodiment of a vegetation cutter according to the invention will now be further described with reference to the accompanying drawings, in which

Figure 1 is a general perspective view of a cutter;

Figure 2 is a section, to an enlarged scale, through the head portion of the cutter of Figure 1;

Figure 3 is an exploded perspective view of the head of Figure 2;

Figure 4 is an underneath view of part of the housing of the cutter of Figure 2;

Figure 5 is a view taken on the line Y-Y of Figure 2 and

Figures 6 to 8 are views, taken on the line Y-Y of Figure 2 showing the position of the balance bar at various stages during the manual override line feeding process described below.

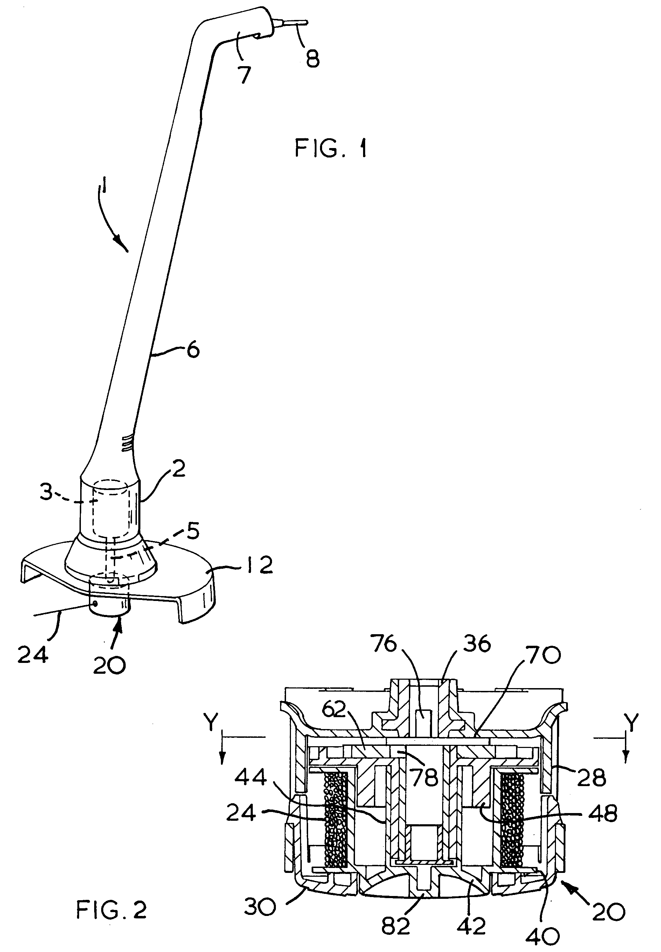

Referring firstly to Figure 1, which is a perspective general view of a cutter, the cutter 1 has a housing 2 that accommodates an electric motor indicated by dotted rectangle 3 which, in use, rotates a head 20 secured on the output shaft 5 of the motor 3. The housing 2 is interconnected by a tube 6 to a handle 7 which houses an electric switch controlling the energisation of the motor 3 from a power supply connected to the switch via a drop-lead connector 8.

Housing 2 accommodates a spool 22 carrying a supply of flexible line or filament 24 the free end portion of which extends from the housing through an aperture 26 in the side wall of the housing.

Detachably secured to the lower end of the housing 2 is a guard 12 which suitably comprises a cutting blade (not shown) for limiting the length of line 24 extending from the head 20.

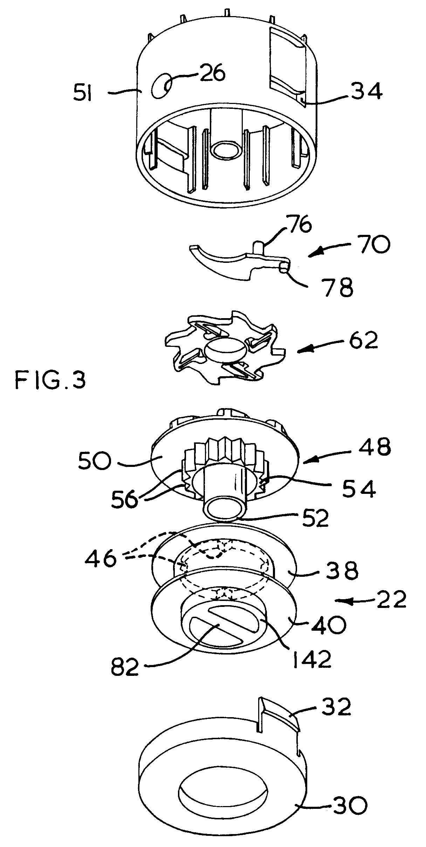

As will be better seen from Figure 2, the cutter head, indicated generally as 20, comprises a cylindrical housing 28 and a cap member 30 releasably attached to the housing 28 by engagement of a flexible tongue 32 (of which there may be more than one) engaging in an aperture 34 in the housing 28 (see Figure 3). Housing 28 is provided with a coupling 36 for attachment to a drive shaft such as shaft 5 of Figure 1.

Located within housing 28 is a rotatable spool 22 carrying cutting line 24 the cutting end of which extends through aperture 26 in housing 28. Spool 22 includes upper and lower flanges 38, 40, and a slightly convex circular bottom wall 42 with which is integrally formed an annular wall 44. The spool 22 is provided with radially-inwardly extending dogs 46 (see Figure 3).

Also within housing 28 is a cam member 48, which comprises a disc-like circular flange 50 from which depends an inner annular wall 52. An outer annular wall 54 of the cam member carries driving dogs 56 which, in the normal operating mode of the cutter head, are in driving engagement with the dogs 46 of the spool 22. The spool 22 has a recessed handle 82 for manual grasping and turning of the spool relative to the housing 28 when the cutter is at rest. The spool is coupled permanently (except for spool replacement) for rotation with the intermediate member 48, by means of an integral ring 54 of driving dogs 56 which engage the dogs 46.

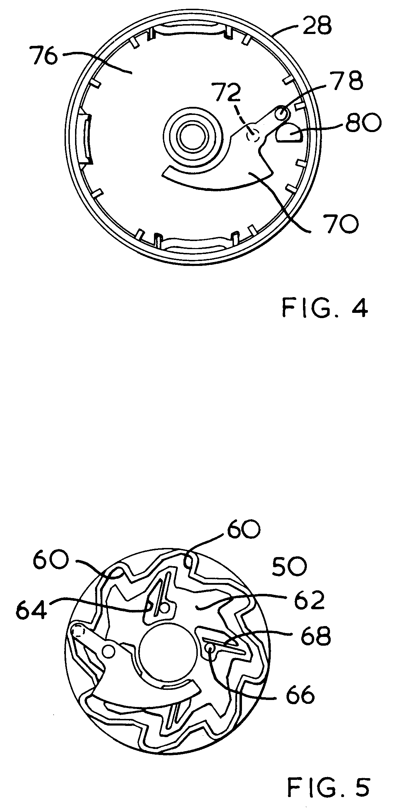

The upper face of the flange 50 of the cam member 48 is contoured to provide a series of angularly-spaced locking faces 60 (see Figure 4). Mounted radially inwardly of the series of locking faces 60 is a cam 62, which has a peripheral surface complementary in shape to the land forming the series of angularly-spaced locking faces 60. The cam 62 is able to rotate relative to cam member 48 to a limited extent. This limited relative movement between cam 62 and cam member 48 is restrained by cut-outs 64 on the cam 62 and engaging upwardly-directed pins 66 formed on the top surface of flange 50. This limited relative rotational movement of cam 62 is opposed by leaf springs 68 integrally moulded with the cam 62.

A balance bar 70 is pivotally mounted, at 72, in the upper wall 74 of housing 28. The balance bar 70 has a pivot pin 76 and a downwardly-depending peg 78 which engages the locking faces 60 and moves along the path delineated by locking faces 60 and the periphery of cam 62. A stop 80 is provided on wall 74, to limit the inwards movement of balance bar 70. The operation of the machine will be described with reference to Figures 5 to 8. Housing 28 is driven by the output shaft 5, and drives the spool 22 through the balance bar 70 and the cam member 50, the driving dogs 56 of which engage the dogs 46 of the spool 22. When the extended line 24 becomes shorter than the norm, the balance bar 70 pivots, allowing the spool 22 to rotate relative to the housing 28, and pay out an amount of line 24 sufficient to restore the cutting line to its desired length.

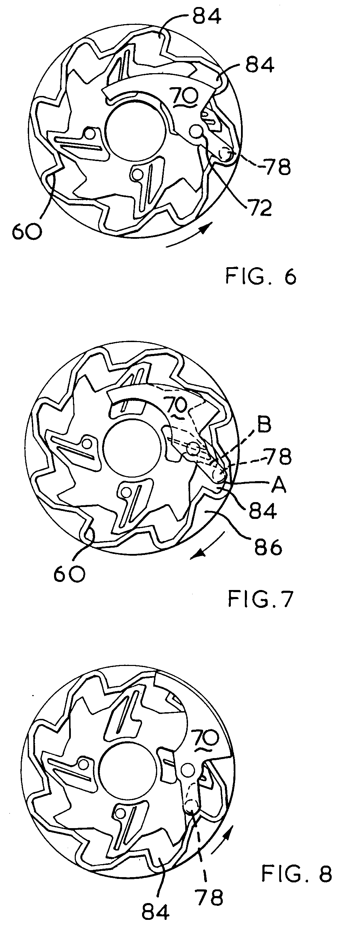

In use, the automatic feed may be overridden manually by stopping the motor; pulling continuously on the free end of the line 24; turning the spool 22 through about one sixteenth of a turn, in the direction opposite to that which feeds line, to "cock" the balance bar 70 (Figures 6 to 8) and then allowing the spool 22 to be turned through about three-sixteenths of a turn in the feeding direction until the peg 78 locks against the next succeeding recess 84 (Figure 6). This process is repeatable for as many incremental line feeding operations as are required to release sufficient line, and the cutter is then ready for automatic operation.

With detailed reference to Figures 6 to 8, the normal, stable, driving position is shown in Figure 6, in which the spool would rotate in that anti-clockwise direction shown to feed line. When the spool is turned clockwise as shown in Figure 7, the inclined cam surface A of the intermediate member 48 cams the peg 78 and causes the balance bar 70 to pivot clockwise; this camming action is continued by sliding engagement of the peg 70 with a radially extending surface B of the inner cam 62, until the balance bar 70 is "cocked" to the point at which peg 78 would turn clear of the tooth 86. Further reverse rotation is prevented by the inner cam 62. Continued pulling on the line, once the spool is released, causes the spool to turn in the normal feeding direction as shown in Figure 8, through about three-sixteenths of a full turn, until the peg 78 lodges in the next recess 84. Frictional engagement of the upper surface of the balance bar 70 with the underside of the housing 28, in the event that there is no clearance there-between, would assist the cocking action, because it would exert a clockwise torque on the balance bar 70 during the reverse turning phase of Figure 7.

In effect, the automatic feed system is used simply as an escapement mechanism for manual override line feed with the housing stationary.

It will be appreciated that the shape of the balance bar 70 is not crucial, and that the disposition of the pivot point in relation to the peg 78 and its centre of inertia could be different, provided that the relevant forces were balanced.

## Claims

1. A device (1) for cutting vegetation comprising
   (i) a housing (28) rotatable about an axis;
   (ii) a rotatable spool (22) within the housing (28) storing a supply of flexible line (24) having an end extending through an aperture (26) in the housing (28) into a cutting plane normal to said axis and
   (iii) a manual feed system for said flexible line (24), characterised in that said feed system comprises
   (iv) means for manually actuating rotation of the spool (22) relative to the housing (28) in the reverse direction to the driving direction.

2. A device according to claim 1, characterised in that the means for actuating rotation of the spool (22) relative to the housing (28) comprises an escapement mechanism which allows the spool to rotate relative to the housing in the opposite direction to the driving direction, with the housing stationary.

3. A device according to claim 1 or claim 2, which also comprises an automatic line feed system and in which the manual feed system is provided as a manual override to the automatic feed system.

4. A device (1) for cutting vegetation comprising
   (i) a housing (28) rotatable about an axis;
   (ii) a rotatable spool (22) within the housing (28) storing a supply of flexible line (24) having an end extending through an aperture (26) in the housing (28) into a cutting plane normal to said axis; and
   (iii) means for causing relative rotation between said spool (22) and said housing (28) whenever the length of line (24) extending into said cutting plane is less than a predetermined length, to cause additional line to be fed into said cutting plane;
   which means comprises
   (a) a series of angularly-spaced locking faces (60) provided on the spool (22) (or on a member connected thereto) or on the housing (28);
   (b) a balance bar (70) pivotally mounted on the housing (28) or on the spool (22), said balance bar (70) having a peg (78) for engagement with said locking faces (60) the centre of gravity of said balance bar (70) being on the side of the pivot point (72) opposite from said peg (78) and
   (c) means tending to direct said member (78) onto said locking faces (60);
   characterised in that a manual override for said feeding means (iii) is provided, which override comprises means (82) for rotating the spool (22) relative to the housing (28) when the cutter is at rest, in the direction opposite to that which feeds line, to cock the balance bar (70) and allow line (24) to be fed.

FIG. 1

FIG. 2

FIG.3

FIG. 4

FIG. 5

FIG. 6

FIG. 7

FIG. 8

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 271 762 (WHITE CONSOLIDATED INDUSTRIES, INC.)<br>* column 9, line 20 - column 10, line 8; claim 1 * | 1 | A01D34/00 |
| A | | 2 | |
| X | EP-A-0 249 585 (M. R. CALCINAI)<br>* column 4, line 3 - line 52 * | 1 | |
| A | | 2 | |
| A,D | EP-A-0 417 966 (BLACK & DECKER INC.)<br>* claim 1; figures * | 3,4 | |
| A | GB-A-2 170 389 (A. STIHL)<br>* the whole document * | 3,4 | |
| A | FR-A-2 361 050 (THE TORO COMPANY) | | |
| A | EP-A-0 426 039 (WHITE CONSOLIDATED INDUSTRIES, INC.) | | |

TECHNICAL FIELDS SEARCHED (Int. Cl.5 )

A01D

The present search report has been drawn up for all claims

| Place of search | Date of completion of the search | Examiner |
|---|---|---|
| BERLIN | 08 JULY 1992 | MERCKX A. |